# EUROPEAN PATENT SPECIFICATION

(11) **EP 4 517 924 B1**
(45) Date of publication and mention of the grant of the patent: **25.11.2026**
(21) Application number: 23819996.2
(22) Date of filing: 04.05.2023
(51) Int. Cl.: H01M 10/48, H01M 10/42, H01M 50/211, G01K 1/14

(54) **TEMPERATURE SENSING ASSEMBLY AND BATTERY MODULE INCLUDING THE SAME**
TEMPERATURERFASSUNGSANORDNUNG UND BATTERIEMODUL DAMIT
ENSEMBLE DE DÉTECTION DE TEMPÉRATURE ET MODULE DE BATTERIE LE COMPRENANT

(30) Priority: 10.06.2022 KR 20220070939; 12.04.2023 KR 20230048466
(43) Date of publication of application: 05.03.2025
(73) Proprietor: LG Energy Solution, Ltd., Seoul 07335 (KR)
(72) Inventor: LEE, Hyun Jae, Daejeon 34122 (KR); CHOI, In Seop, Daejeon 34122 (KR)
(74) Representative: Goddar, Heinz J.
(86) International application number: PCT/KR2023/006105
(87) International publication number: WO 2023/239060

(56) References cited:
- EP-A1- 3 934 004
- CN-U- 210 272 522
- KR-A- 20180 099 440
- KR-A- 20200 083 192
- KR-A- 20210 026 589
- KR-A- 20210 026 589
- KR-A- 20220 020 156

## Description

### TECHNICAL FIELD

### CROSS-REFERENCE TO RELATED APPLICATION

The present application claims the benefit of the priority of Korean Patent Application Nos. 10-2022-0070939, filed on June 10, 2022, and 10-2023-0048466, filed on April 12, 2023.

### TECHNICAL FIELD

The present invention relates to a temperature sensing assembly for sensing a temperature of a cell stack, and a battery module including the temperature sensing assembly.

### BACKGROUND ART

In modern society, as portable devices such as mobile phones, notebook computers, camcorders and digital cameras, are daily used, the development of technologies in the fields related to mobile devices as above is actively carried out. In addition, secondary batteries that are chargeable and dischargeable are used as power sources for electric vehicles (EV), hybrid electric vehicles (HEV), plug-in hybrid electric vehicles (P-HEV) and the like, which are proposed as solutions to solve problems such as air pollution caused by existing gasoline vehicles and the like, using fossil fuel, and therefore, there is an increasing need for development of the secondary batteries.

Currently commercialized secondary batteries include nickel-cadmium batteries, nickel-hydrogen batteries, nickel-zinc batteries, lithium secondary batteries, and the like. Among the secondary batteries, the lithium secondary batteries attract interest due to merits that the lithium secondary batteries are freely chargeable and dischargeable because of having little memory effect compared to nickel-based secondary batteries, and have very low self-discharge rate and high energy density.

In such a lithium secondary battery, a lithium-based oxide and a carbonaceous material are mainly used as a positive electrode active material and a negative electrode active material, respectively. The lithium secondary battery includes an electrode assembly, in which a positive electrode plate and a negative electrode plate that are coated with the positive electrode active material and the negative electrode active material, respectively, are disposed with a separator therebetween, and an exterior material, i.e., a battery case, which seals and accommodates the electrode assembly together with an electrolyte.

In general, according to the shape of the exterior material, the lithium secondary batteries may be classified into a can type secondary battery, in which an electrode assembly is embedded in a metal can, and a pouch type secondary battery in which an electrode assembly is embedded in a pouch made of an aluminum laminate sheet.

In secondary batteries used in small-sized devices, two or three battery cells are disposed, but, in secondary batteries used in medium to large-sized devices such as vehicles, a battery module in which a plurality of battery cells are electrically connected to each other is used.

In this battery module, the plurality of battery cells are connected to each other in parallel or in series to provide a battery cell stack so that capacity and output are improved. Moreover, one or more battery modules may be mounted together with various control and protection systems such as a battery management system (BMS) and cooling system, to provide a battery pack.

When overvoltage, overcurrent, or overheating occurs in the battery cells included in the battery module, this is highly problematic in terms of safety and operational efficiency of the battery module. As an example, when the pressure or temperature of the battery increases, a decomposition reaction of the active material and multiple side reactions proceed, and accordingly, the temperature of the battery rapidly increases. This rapid temperature increase reaccelerates the reaction between the electrolyte and the electrode. Eventually, thermal runaway in which the temperature of the battery rapidly increases occurs, and, when the temperature increases to a certain level or higher, ignition of the battery may occur, and the battery cell and the battery module including the battery cell explode due to the increased internal pressure of the battery.

Accordingly, a means for detecting a change in temperature of the battery cell is required, and thus, a temperature sensor such as a thermistor is disposed in the battery module to check and control an operational state in real time or at fixed intervals. KR 2021 0026589 A describes a temperature sensing assembly for a battery module. The assembly includes a bridge, a flexible circuit board formed on a lower side of the bridge, and a temperature sensor formed between the bridge and the flexible circuit board. The bridge includes a bridge opening formed in a portion corresponding to the position of the temperature sensor. A compression pad is positioned between the bridge and the flexible circuit board. A first adhesive layer is formed between the compression pad and the bridge, and a second adhesive layer is formed between the compression pad and the flexible circuit board. In a mounting process, the assembly can rotate by a specific angle against the battery module. EP 3 934 004 A1 describes a temperature collection assembly for a battery module having a battery, a top cover and a harness plate disposed on a top outer side of the top cover. A via hole is disposed on the harness plate. The assembly includes a circuit board disposed on a side of the harness plate away from the battery. The circuit board comprises a thermistor disposed on a side of the circuit board away from the harness plate. A thermal pad fits with the top cover through the via hole and thermally connects the thermistor and the top cover. A compression element presses the thermistor against the top cover. An elastic pad is sandwiched between the bottom of the mounting slot and the thermistor. A mounting slot is formed in a middle region of the compression element. A size of the mounting slot needs to enable the end of the thermistor to be fully located inside the same. The mounting slot prevents the pressing force of the compression element from damaging the thermistor. In a mounting process, the compression element can rotate by a specific angle against the harness plate.

### DISCLOSURE OF THE INVENTION

### TECHNICAL PROBLEM

An object of the present invention for solving the above problems is to provide a temperature sensing assembly, which prevents a temperature sensor from being damaged and has improved accuracy and reliability, and a battery module including the temperature sensing assembly.

### TECHNICAL SOLUTION

The technical solution is defined in the appended claims.

### ADVANTAGEOUS EFFECTS

According to the preferred embodiments of the present invention, even when the cell stack swells, or the pressure is applied to the substrate by the tolerance or the like during the assembling of the battery module, the temperature sensor may be prevented from being damaged by the compression member, and the substrate may be maintained to be in the state of being adjacent to or in close contact with the cell stack. Accordingly, the accuracy and the reliability of the temperature sensor may be improved.

Moreover, the compression member may not interfere with the temperature sensor and the hole of the bridge may be defined to face the temperature sensor, so that the temperature sensor enters the hole even when the compression member is excessively compressed. Accordingly, the temperature sensor may be prevented from being damaged.

In addition, the effects may be included which are easily predictable by those skilled in the art from the configurations according to the preferred embodiments of the present invention.

### BRIEF DESCRIPTION OF THE DRAWINGS

The following drawings attached in this specification illustrate a preferred embodiment of the present invention and function to make further understood the present invention along with the detailed description of the invention. The present invention should not be construed as being limited to only the drawings.
FIG. 1 is a perspective view illustrating an outer appearance of a battery module according to an embodiment of the present invention.
FIG. 2 is an exploded perspective view of the battery module illustrated in FIG. 1.
FIG. 3 is a view illustrating a temperature sensing assembly provided in a battery module according to an embodiment of the present invention.
FIG. 4 is an exploded perspective view of a temperature sensing assembly according to an embodiment of the present invention.
FIG. 5 is a plan view of a temperature sensing assembly according to an embodiment of the present invention.
FIG. 6 is a schematic view for explaining an operation of a temperature sensing assembly according to an embodiment of the present invention.
FIGS. 7 and 8 are views of a temperature sensing assembly according to Comparative Example.
FIG. 9 is an exploded perspective view of a temperature sensing assembly according to another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

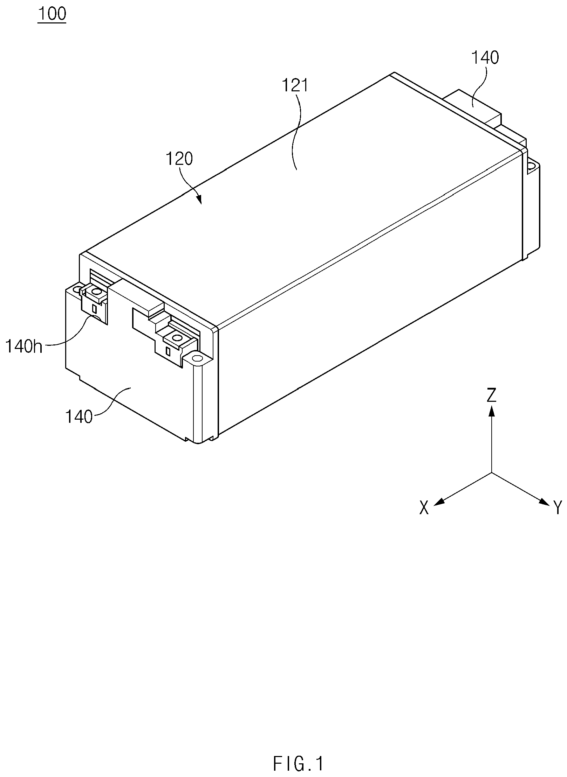

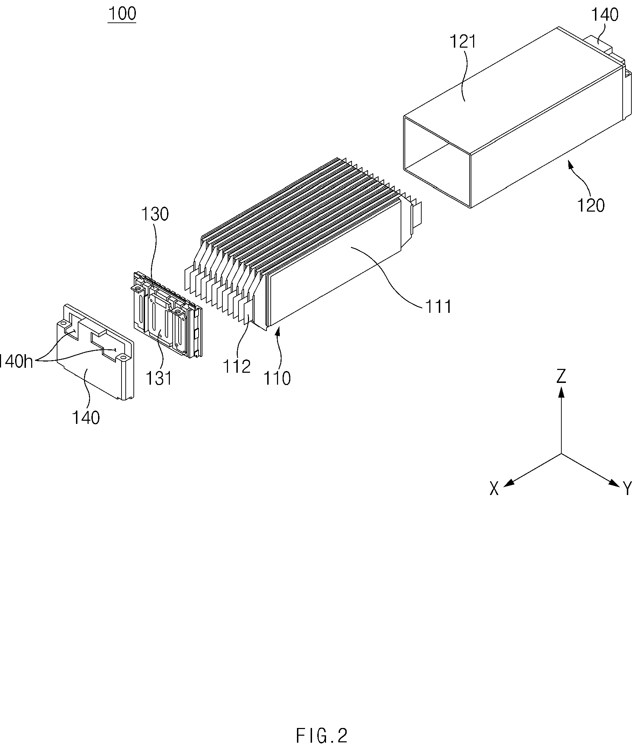

FIG. 1 is a perspective view illustrating an outer appearance of a battery module according to an embodiment of the present invention. FIG. 2 is an exploded perspective view of the battery module illustrated in FIG. 1.

A battery module 100 according to an embodiment of the present invention may include a cell stack 110 and a housing 120.

The cell stack 110 may include a plurality of battery cells 111 disposed to be parallel to each other. The cell stack 110 may be accommodated in the housing 120.

The plurality of battery cells 111 may be disposed to face each other in a first direction (e.g., a direction parallel to an Y axis). In more detail, the plurality of battery cells 111 may be stacked in the first direction. In addition, each of the battery cells 111 may be disposed to be elongated in a second direction (e.g., a direction parallel to an X axis) perpendicular to the first direction. The first direction may be a direction parallel to a full-width direction of the housing 120, and the second direction may be a direction parallel to a full-length direction of the housing 120.

Each of the battery cells 111 may be a pouch type battery cell. In the pouch type battery cell, the number of stacked battery cells per unit area may be maximized, and thus an energy density of the battery module 100 may increase. The battery cell 111 provided in a pouch type may be manufactured by accommodating an electrode assembly, which includes a positive electrode, a negative electrode, and a separator, in a cell case in which a laminate sheet is molded, and then, thermally fusing and sealing the cell case. However, the battery cell 111 is not necessarily provided in a pouch type, and it is apparent that the battery cell 111 may be provided in a prismatic type, a cylinder type, or other various types under a level at which storage capacity required by a device on which the battery cell 111 is mounted in the future is achieved.

Each of the battery cells 111 may be provided with a pair of electrode leads 112. The pair of electrode leads 112 may protrude at opposite directions, and may protrude to be parallel to a longitudinal direction of the battery cell 111. However, an embodiment of the present invention is not limited thereto, and it is also possible that the pair of electrode leads 112 protrude to be parallel to each other in the same direction.

In addition, the cell stack 110 may be provided with at least one heat dissipating pad. The heat dissipating pad may be disposed between the plurality of battery cells 111, or disposed to cover the outermost battery cell 111.

The housing 120 may provide an outer appearance of the battery module 100. The housing 120 may have a metal material having high rigidity.

The housing 120 may have various structures. As one example, the housing 120 may be a mono-frame. The mono-frame may be a metal plate in which an upper plate 121, a lower plate, and a pair of side plates are integrated with each other. As another example, the housing 120 may have a structure in which a U-shaped frame and the upper plate 121 are coupled to each other. The U-shaped frame may be a metal plate in which a lower plate and side plates are coupled to or integrated with each other. In addition, the structure of the housing 120 may be provided as a structure, in which L-shaped frames are coupled to each other, and may be provided as various structures that are not described in the foregoing examples.

The housing 120 may have an inner space, and the cell stack 110 may be accommodated in the inner space. In more detail, the housing 120 may include the upper plate 121, the lower plate, and the pair of side plates. In the housing 120, each of both ends in the full-length direction may be opened, and may be covered by an end plate 140 to be described later.

The battery module 100 may further include a busbar frame 130 and the end plate 140.

The busbar frame 130 may be disposed at each of both sides in a full-length direction of the cell stack 110. At least one busbar 131 may be mounted on the busbar frame 130, and each of the busbars 131 may be connected to the electrode leads 112 of the battery cells 111. The busbar 131 may be a component for electrically connecting the plurality of battery cells 111 to an external device.

The end plate 140 may be disposed outside the busbar frame 130. That is, the busbar frame 130 may be disposed between the cell stack 110 and the end plate 140.

The end plate 140 may be coupled to the housing 120. The end plate 140 may cover each of both the opened ends of the housing 120. An opening 140h may be defined in the end plate 140, and an electrical connection of the busbar 131 may be achieved through the opening 140h. That is, the busbar 131 of one battery module 100 may be electrically connected to another battery module 100 or a battery disconnect unit (BDU) through the opening 140h.

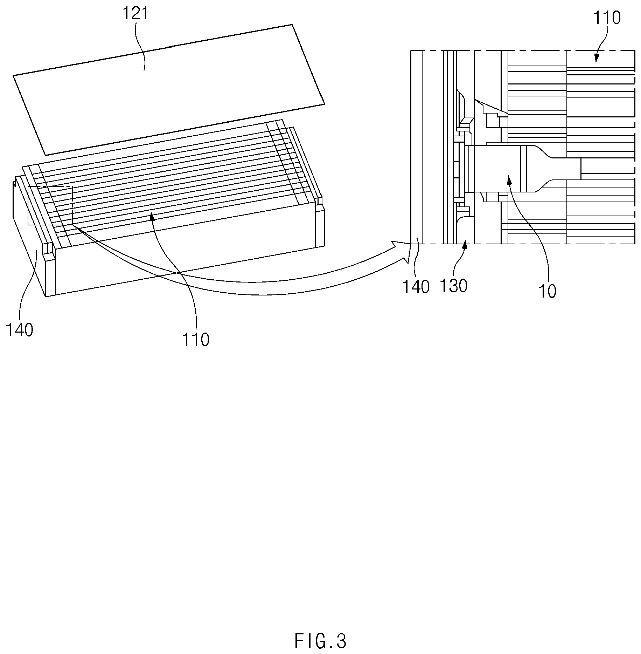

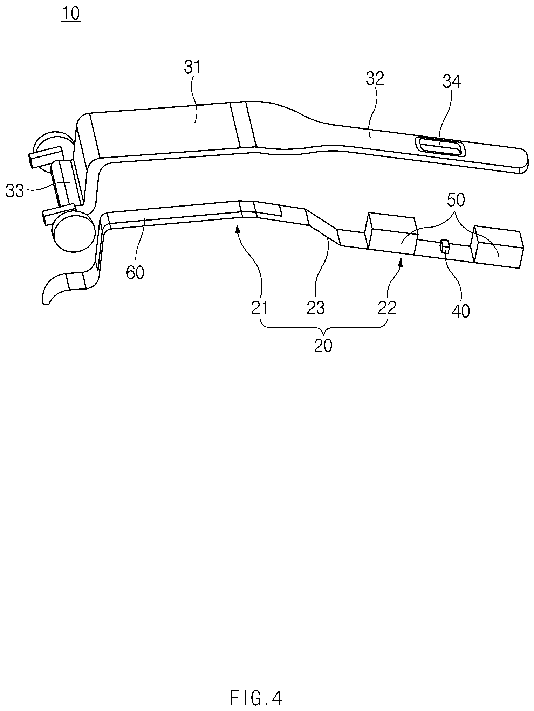

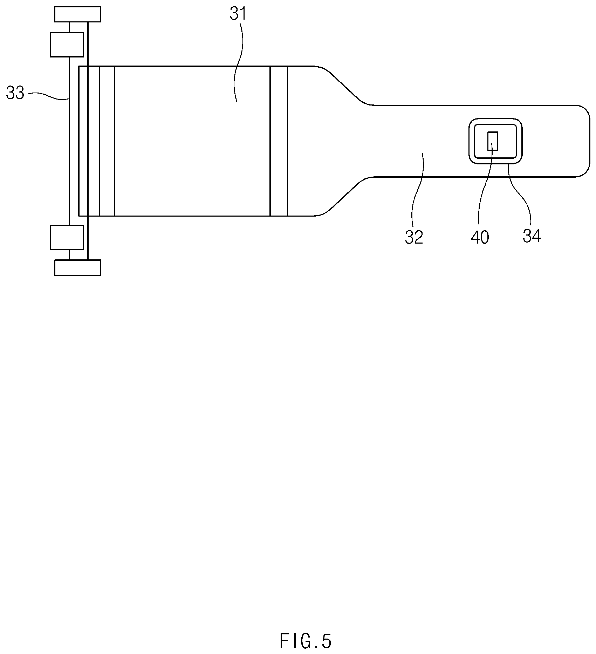

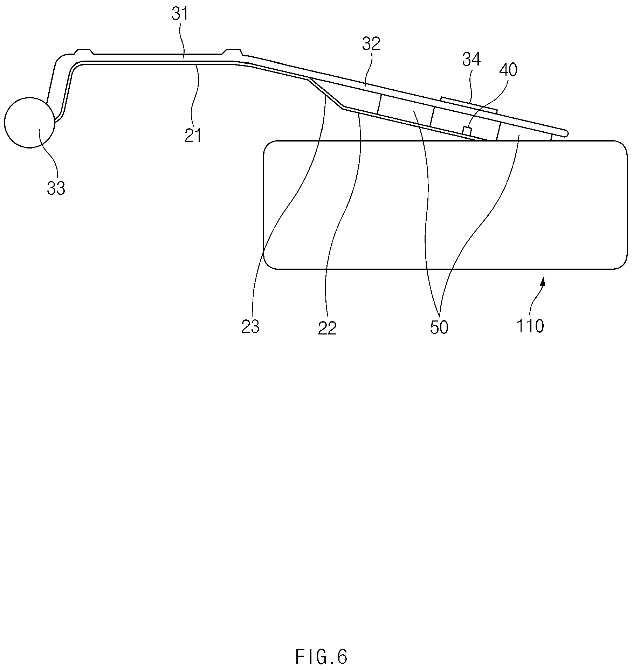

FIG. 3 is a view illustrating a temperature sensing assembly provided in a battery module according to an embodiment of the present invention. FIG. 4 is an exploded perspective view of a temperature sensing assembly according to an embodiment of the present invention. FIG. 5 is a plan view of a temperature sensing assembly according to an embodiment of the present invention. FIG. 6 is a schematic view for explaining an operation of a temperature sensing assembly according to an embodiment of the present invention.

The battery module 100 may include a temperature sensing assembly 10 that senses a temperature of the cell stack 110.

At least a portion of the temperature sensing assembly 10 may be disposed between the upper plate 121 of the housing 120 and the cell stack 110. That is, the at least a portion of the temperature sensing assembly 10 may be disposed above the cell stack 110, and may be disposed below the upper plate 121. The temperature sensing assembly 10 may be pressed to or allowed to be in close contact with the side of the cell stack 110 by the upper plate 121 or a separate component disposed at a lower portion of the upper plate 121.

The temperature sensing assembly 10 may be connected to the busbar frame 130. In more detail, the temperature sensing assembly 10 may be pivotably connected to the busbar frame 130. For example, the temperature sensing assembly 10 may be hinge-coupled to the busbar frame 130.

Accordingly, the temperature sensing assembly 10 may be in reliably close contact with the cell stack 110, and may accurately measure the temperature of the cell stack 110.

The temperature sensing assembly 10 may include a substrate 20, a temperature sensor 40 mounted on the substrate 20, a bridge 30, which is coupled to the substrate 20 and in which a hole 34 facing the temperature sensor 40 is defined, and a compression member 50 disposed between the bridge 30 and the substrate 20.

The substrate 20 may be disposed above the cell stack 10. The substrate 20 may be provided to be elongated approximately in the full-length direction of the cell stack 110. The substrate 20 may include a plurality of regions having different tilt angles. The substrate 20 may be provided as one body, but is not limited thereto.

The temperature sensor 40 may be mounted on the substrate 20. The temperature sensor 40 may be a device capable of temperature sensing. The temperature sensor 40 may be fixed onto the substrate 20 by soldering.

The temperature sensor 40 may include a thermistor. The thermistor is a semiconductor device using a phenomenon in which a resistance value varies depending on temperature. There are advantages that the thermistor is small in size and capable of measuring the temperature despite a rapid change in temperature or a slight change in temperature.

The substrate 20 may be a flexible printed circuit board (FPCB). The substrate 20 may be electrically connected to the temperature sensor 40, and may transmit the temperature information measured by the temperature sensor 40 to the outside.

The temperature information measured by the temperature sensor 40 may be transmitted to another device outside the battery module 100. For example, the temperature information measured by the temperature sensor 40 may be transmitted to a battery management system (BMS) outside the battery module 100 to be used to control the battery module 100.

The bridge 30 may be coupled at an upper side of the substrate 20. The bridge 30 may have higher rigidity than the substrate 20 and support the substrate 20.

The bridge 30 may be provided to be elongated approximately in the full-length direction of the cell stack 110. The bridge 30 may include a plurality of regions having different tilt angles. The bridge 30 may be provided as one body, but is not limited thereto.

The bridge 30 may be pivotably connected to the busbar frame 130. In more detail, the bridge 30 may be hinge-coupled to an upper end of the busbar frame 130 so as to be pivotable with respect to the busbar frame 130. As the bridge 30 is connected to the substrate 20, the bridge 30 may pivot together with the substrate 20. The bridge 30 may pivot around a shaft parallel to a stacking direction of the cell stack 110.

The hole 34 facing the temperature sensor 40 on the substrate 20 may be defined in the bridge 30. Thus, even when the substrate 20 is deformed toward the bridge 30, the temperature sensor 40 may be inserted into the hole 34. That is, the temperature sensor 40 may be prevented from interfering with the bridge 30.

The substrate 20 may include a coupling part 21 coupled to the bridge 30, and a mounting part 22 which is spaced a predetermined distance from the bridge 30 and on which the temperature sensor 40 is mounted. The substrate 20 may further include an inclined part 23 that connects the coupling part 21 to the mounting part 22 and is provided to be tilted with respect to the mounting part 22.

The bridge 30 may include a body part 31 to which the substrate 20 is coupled, and an extension part 32 that extends from the body part 31, is spaced a predetermined distance from the substrate 20, and is in contact with the compression member 50. The bridge 30 may further include a connecting part 33 pivotably connected to the busbar frame 130.

The coupling part 21 of the substrate 20 may be bonded to the bridge 30, and may accordingly be simply coupled to the bridge 30. That is, an adhesive layer 60 may be provided between the coupling part 21 and the bridge 30.

The coupling part 21 may be coupled to the body part 31 of the bridge 30. The coupling part 21 of the substrate 20 may be provided to be parallel to the body part 31 of the bridge 30. Thus, the coupling part 21 and the body part 31 may be in close contact with and coupled to each other with the adhesive layer 60 therebetween.

For example, the adhesive layer 60 may be a double-sided tape.

However, the coupling method between the coupling part 21 of the substrate 20 and the body part 31 of the bridge 30 is not limited thereto.

The mounting part 22 of the substrate 20 may be spaced a predetermined distance from the bridge 30. In more detail, the mounting part 22 may be spaced a predetermined distance from the extension part 32 of the bridge 30. Due to the distance, the temperature sensor 40 and the compression member 50 may be disposed between the substrate 20 and the bridge 30.

The extension part 32 of the bridge 30 may extend from the body part 31. The extension part 32 and the body part 31 may be provided to be parallel to each other or to have different tilts.

The mounting part 22 of the substrate 20 may be provided to be parallel to the extension part 32 of the bridge 30. Thus, the distance may be uniformly provided in a longitudinal direction of the mounting part 22.

The temperature sensor 40 may be mounted on the mounting part 22. The temperature sensor 40 may be fixed onto the mounting part 22 by soldering.

The temperature sensor 40 may face the hole 34 defined in the bridge 30. In more detail, the hole 34 facing the temperature sensor 40 may be defined in the extension part 32 of the bridge 30. Thus, even when the mounting part 22 of the substrate 20 is deformed toward the extension part 32 of the bridge 30, the temperature sensor 40 may be inserted into the hole 34. That is, the temperature sensor 40 may be prevented from interfering with the extension part 32 of the bridge 30.

The inclined part 23 of the substrate 20 may be disposed between the coupling part 21 and the mounting part 22, and connect the coupling part 21 to the mounting part 22. The inclined part 23 may be provided integrally with the coupling part 21 and the mounting part 22. An approximate height difference between the coupling part 21 and the mounting part 22 may be achieved due to the inclined part 23. Accordingly, the coupling part 21 may be in close contact with the body part 31 of the bridge 30, and the mounting part 22 may be spaced a predetermine distance from the extension part 32 of the bridge 30.

The connecting part 33 of the bridge 30 may have a shape that is bent downward from the body part 31. The connecting part 33 may be pivotably connected to the busbar frame 130.

The compression member 50 may be disposed between the substrate 20 and the bridge 30. The compression member 50 may be disposed between the mounting part 22 of the substrate 20 and the extension part 32 of the bridge 30.

The compression member 50 may be bonded to each of the substrate 20 and the bridge 30. That is, the compression member 50 may have a bottom surface bonded to the mounting part 22 of the substrate 20, and a top surface bonded to the extension part 32 of the bridge 30.

For example, a lower adhesive layer may be provided between the bottom surface of the compression member 50 and a top surface of the mounting part 22, and an upper adhesive layer may be provided between the top surface of the compression member 50 and a bottom surface of the extension part 32. Each of the lower adhesive layer and the upper adhesive layer may be a double-sided tape.

Accordingly, the mounting part 22 of the substrate 20 and the extension part 32 of the bridge 30 may be prevented from being separated or deformed unintentionally.

The compression member 50 may be configured to be compressed when the substrate 20 is deformed toward the bridge 30. The compression member 50 may mitigate the deformation of the substrate 20 and prevent the substrate 20 from interfering with the bridge 30. In addition, the durability of the temperature sensing assembly 10 may be improved due to the compression member 50.

The compression member 50 may be a compression pad of which a material itself has elasticity and which is compressed and deformed. In this case, the material of the compression member 50 is not limited, and the compression member 50 may have a material that is elastically deformed by preset external force. For example, the compression member 50 may have a material such as sponge or polyurethane foam, which is elastically deformed, and may be compressed between the bridge 30 and the substrate 20.

However, an embodiment of the present invention is not limited thereto. Like a spring or the like, the compression member 50 may be configured to exhibit elasticity due to the shape.

The compression member 50 may be disposed at both sides of the temperature sensor 40. That is, a portion of the compression member 50 may be disposed at one side of the temperature sensor 40, and the other portion of the compression member 50 may be disposed at the other side of the temperature sensor 40.

For example, the compression member 50 may include a first compression member 50 disposed at one side of the temperature sensor 40, and a second compression member 50 disposed at the other side of the temperature sensor 40.

Accordingly, the compression member 50 may not interfere with the temperature sensor 40, and pressure may be prevented from being applied to the temperature sensor 40 when the compression member 50 is compressed. In more detail, even when the cell stack 110 swells, or a pressure is applied to the substrate 20 by a tolerance or the like during assembling of the battery module 100, the temperature sensor 40 may be prevented from being damaged by the compression member 50, and the substrate 20 may be maintained to be in a state of being adjacent to or in close contact with the cell stack 110. Accordingly, accuracy and reliability of the temperature sensor 40 may be improved.

The hole 34 defined in the bridge 30 may not overlap the compression member 50 in a penetration direction of the hole 34. Accordingly, the compression member 50 may be prevented from blocking the hole 34, and the temperature sensor 40 may face the hole 34 or enter the hole 34 even when the compression member 50 is compressed.

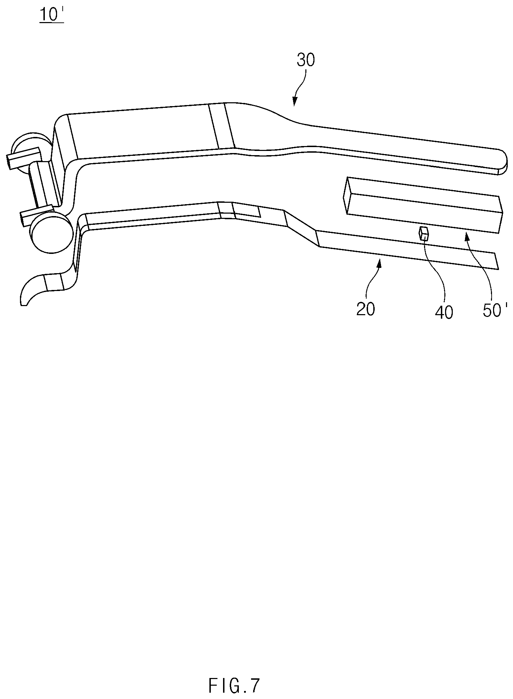

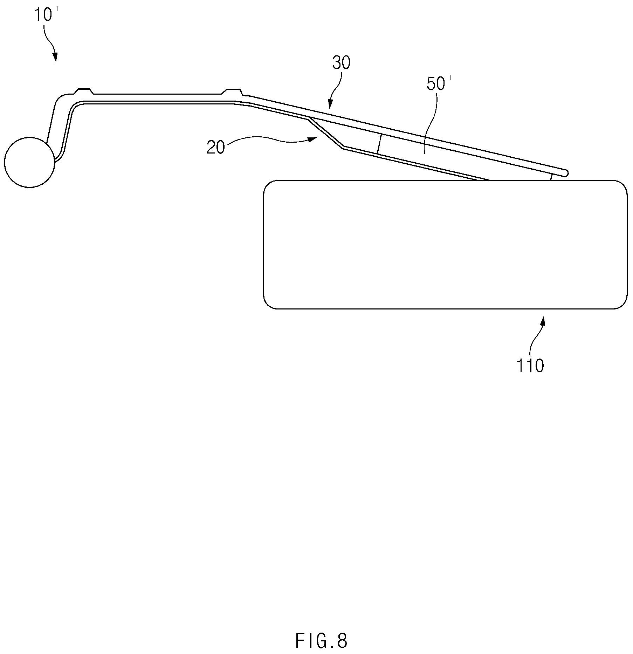

FIGS. 7 and 8 are views of a temperature sensing assembly according to Comparative Example.

In a temperature sensing assembly 10' according to Comparative Example, a hole facing a temperature sensor 40 may not be defined in a bridge 30, and a compression member 50' may cover the temperature sensor 40. That is, the temperature sensor 40 may be buried in the compression member 50'.

Thus, there is no problem when the compression member 50' is slightly compressed, but there is a concern that the temperature sensor 40 may be damaged when the compression member 50' is tightly compressed.

In contrast, as described above, in the temperature sensing assembly 10 according to the present invention, the compression member 50 may not interfere with the temperature sensor 40 and the hole 34 of the bridge 30 may be defined to face the temperature sensor 40, so that the temperature sensor 40 enters the hole 34 even when the compression member 50 is excessively compressed. Accordingly, the temperature sensor 40 may be prevented from being damaged.

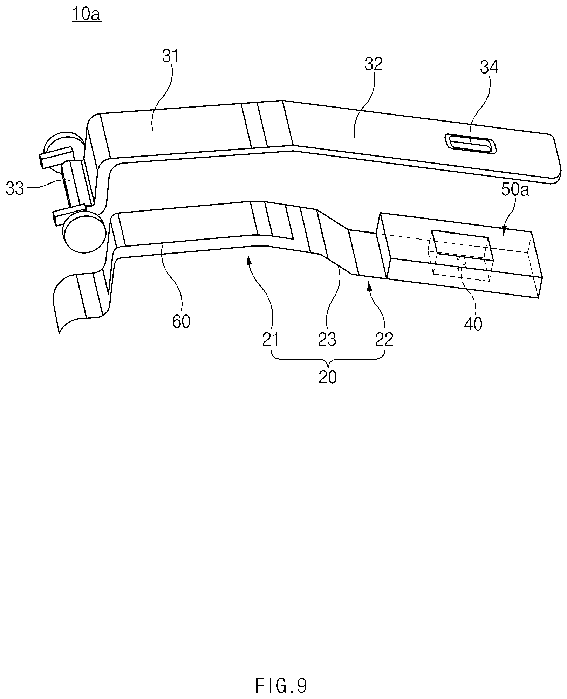

FIG. 9 is an exploded perspective view of a temperature sensing assembly according to another embodiment of the present invention.

The description of an embodiment of the present invention above applies to a temperature sensing assembly 10a according to another embodiment of the present invention, except for a compression member 50a.

The compression members 50a disposed at both sides of a temperature sensor 40, respectively, may be connected to each other without an interference with the temperature sensor 40. The compression members 50a may be provided as one body.

The compression member 50a may surround the temperature sensor 40. That is, a portion of the compression member 50a may be disposed at one side of the temperature sensor 40, and the other portion of the compression member 50a may be disposed at the other side of the temperature sensor 40.

In more detail, a through-hole may be defined in the compression member 50a, and the temperature sensor 40 may be disposed in the through-hole. The through-hole may face a hole 34 defined in a bridge 30.

This embodiment has an advantage that a process of bonding the compression member 50a to a substrate 20 and/or a bridge 30 is simplified.

The description of the present invention is intended to be illustrative, and various changes and modifications can be made by those of ordinary skill in the art to which the present invention pertains, without departing from the scope of the present invention as defined by the appended claims.

Therefore, the embodiments set forth herein are to describe the present invention and not to limit. The scope of the present invention is not limited by the embodiments.

Moreover, the protective scope of the present invention should be determined by reasonable interpretation of the appended claims and all technical concepts coming within the equivalency range of the present application should be interpreted to be in the scope of the right of the present application.

**[Description of the Symbols]**

| | | | |
|---|---|---|---|
| 10: | Temperature sensing assembly | 20: | Substrate |
| 21: | Coupling part | 22: | Mounting part |
| 23: | Inclined part | 30: | Bridge |
| 31: | Body part | 32: | Extension part |
| 33: | Connecting part | 34: | Hole |
| 40: | Temperature sensor | 50: | Compression member |
| 60: | Adhesive layer | 100 : | Battery module |
| 110: | Cell stack | 111 : | Battery cell |
| 120: | Housing | 130 : | Busbar frame |
| 140: | End plate | | |

sensor 40, and the other portion of the compression member 50a may be disposed at the other side of the temperature sensor 40.

In more detail, a through-hole may be defined in the compression member 50a, and the temperature sensor 40 may be disposed in the through-hole. The through-hole may face a hole 34 defined in a bridge 30.

This embodiment has an advantage that a process of bonding the compression member 50a to a substrate 20 and/or a bridge 30 is simplified.

The invention is defined by the appended claims.

**[Description of the Symbols]**

| | | | |
|---|---|---|---|
| 10: | Temperature sensing assembly | 20: | Substrate |
| 21: | Coupling part | 22: | Mounting part |
| 23: | Inclined part | 30: | Bridge |
| 31: | Body part | 32: | Extension part |
| 33: | Connecting part | 34: | Hole |
| 40: | Temperature sensor | 50: | Compression member |
| 60: | Adhesive layer | 100 : | Battery module |
| 110: | Cell stack | 111 : | Battery cell |
| 120: | Housing | 130 : | Busbar frame |
| 140: | End plate | | |

## Claims

1. A temperature sensing assembly (10, 10a) comprising:
a substrate (20);
a temperature sensor (40) mounted on the substrate (20);
a bridge (30) which is coupled to the substrate (20) and in which a hole (34) facing the temperature sensor (40) is defined; and
a compression member (50, 50a) disposed between the bridge (30) and the substrate (20) at each of both sides of the temperature sensor (40),
**characterized in that** the hole (34) does not overlap the compression member (50, 50a) in a penetration direction of the hole (34).

2. The temperature sensing assembly (10, 10a) of claim 1, wherein the bridge (30) is coupled at an upper side of the substrate (20).

3. The temperature sensing assembly (10, 10a) of claim 1, wherein the bridge (30) comprises:
a body part (31) to which the substrate (20) is coupled;
and
an extension part (32) that extends from the body part (31), is spaced a predetermined distance from the substrate (20), and is in contact with the compression member (50, 50a).

4. The temperature sensing assembly (10, 10a) of claim 3, wherein the hole (34) is defined in the extension part (32).

5. The temperature sensing assembly (10, 10a) of claim 1, wherein the substrate (20) comprises:
a coupling part (21) coupled to the bridge (30); and
a mounting part (22) which is spaced a predetermined distance from the bridge (30) and on which the temperature sensor (40) is mounted.

6. The temperature sensing assembly (10, 10a) of claim 5, wherein an adhesive layer (60) is provided between the coupling part (21) and the bridge (30).

7. The temperature sensing assembly (10, 10a) of claim 5, wherein the substrate (20) further comprises an inclined part (23) connecting the coupling part (21) to the mounting part (22), and provided to be tilted with respect to the mounting part (22).

8. The temperature sensing assembly (10, 10a) of claim 1, wherein the compression member (50, 50a) is bonded to each of the substrate (20) and the bridge (30).

9. A battery module (100) comprising:
a housing (120);
a cell stack (110) accommodated in the housing (120) and comprising a plurality of battery cells (111) disposed to be parallel to each other; and
a temperature sensing assembly (10, 10a) according to claim 1 configured to sense a temperature of the cell stack (110) .

10. The battery module (100) of claim 9, further comprising a busbar frame (130) on which a busbar (131) connected to the plurality of battery cells (111) is mounted,
wherein the bridge (30) is pivotably connected to the busbar frame (130).

11. The battery module (100) of claim 9, wherein at least a portion of the temperature sensing assembly (10, 10a) is disposed between an upper plate (121) of the housing (120) and the cell stack (110).

## Patentansprüche

1. Temperaturerfassungsanordnung (10, 10a) aufweisend:
ein Substrat (20);
einen Temperatursensor (40), der auf dem Substrat (20) montiert ist;
eine Brücke (30), die mit dem Substrat (20) gekoppelt ist und in der ein dem Temperatursensor (40) zugewandtes Loch (34) definiert ist; und
ein Kompressionselement (50, 50a), das zwischen der Brücke (30) und dem Substrat (20) auf jeder der beiden Seiten des Temperatursensors (40) angeordnet ist,
**dadurch gekennzeichnet, dass** das Loch (34) das Kompressionselement (50, 50a) in einer Durchdringungsrichtung des Lochs (34) nicht überlappt.

2. Temperaturerfassungsanordnung (10, 10a) nach Anspruch 1, wobei die Brücke (30) an einer Oberseite des Substrats (20) gekoppelt ist.

3. Temperaturerfassungsanordnung (10, 10a) nach Anspruch 1, wobei die Brücke (30) aufweist:
ein Körperteil (31), mit dem das Substrat (20) gekoppelt ist; und
ein Verlängerungsteil (32), das sich von dem Körperteil (31) erstreckt, in einem vorbestimmten Abstand von dem Substrat (20) beabstandet ist und mit dem Kompressionselement (50, 50a) in Kontakt steht.

4. Temperaturerfassungsanordnung (10, 10a) nach Anspruch 3, wobei das Loch (34) in dem Verlängerungsteil (32) definiert ist.

5. Temperaturerfassungsanordnung (10, 10a) nach Anspruch 1, wobei das Substrat (20) aufweist:
ein Kopplungsteil (21), das mit der Brücke (30) gekoppelt ist; und
ein Montageteil (22), das in einem vorbestimmten Abstand von der Brücke (30) beabstandet ist und auf dem der Temperatursensor (40) montiert ist.

6. Temperaturerfassungsanordnung (10, 10a) nach Anspruch 5, wobei eine Klebeschicht (60) zwischen dem Kopplungsteil (21) und der Brücke (30) gebildet ist.

7. Temperaturerfassungsanordnung (10, 10a) nach Anspruch 5, wobei das Substrat (20) ferner ein geneigtes Teil (23) aufweist, das das Kopplungsteil (21) mit dem Montageteil (22) verbindet und so gebildet ist, dass es relativ zu dem Montageteil (22) geneigt ist.

8. Temperaturerfassungsanordnung (10, 10a) nach Anspruch 1, wobei das Kompressionselement (50, 50a) sowohl mit dem Substrat (20) als auch mit der Brücke (30) verbunden ist.

9. Batteriemodul (100) aufweisend:
ein Gehäuse (120);
einen Zellenstapel (110), der in dem Gehäuse (120) aufgenommen ist und mehrere Batteriezellen (111) aufweist, die parallel zueinander angeordnet sind; und
eine Temperaturerfassungsanordnung (10, 10a) nach Anspruch 1, die konfiguriert ist, um eine Temperatur des Zellenstapels (110) zu erfassen.

10. Batteriemodul (100) nach Anspruch 9, ferner aufweisend einen Sammelschienenrahmen (130), auf dem eine Sammelschiene (131) montiert ist, die mit den mehreren Batteriezellen (111) verbunden ist,
wobei die Brücke (30) schwenkbar mit dem Sammelschienenrahmen (130) verbunden ist.

11. Batteriemodul (100) nach Anspruch 9, wobei mindestens ein Abschnitt der Temperaturerfassungsanordnung (10, 10a) zwischen einer oberen Platte (121) des Gehäuses (120) und dem Zellenstapel (110) angeordnet ist.

## Revendications

1. Ensemble de détection de température (10, 10a), comprenant :
un substrat (20) ;
un capteur de température (40) monté sur le substrat (20) ;
un pont (30) couplé au substrat (20) et dans lequel est défini un orifice (34) faisant face au capteur de température (40) ; et
un élément de compression (50, 50a) disposé entre le pont (30) et le substrat (20) à chacun des deux côtés du capteur de température (40),
**caractérisé en ce que** l'orifice (34) ne chevauche pas l'élément de compression (50, 50a) dans le sens de la pénétration de l'orifice (34).

2. Ensemble de détection de température (10, 10a) selon la revendication 1, le pont (30) étant couplé à un côté supérieur du substrat (20).

3. Ensemble de détection de température (10, 10a) selon la revendication 1, le pont (30) comprenant :
une partie de corps (31) à laquelle le substrat (20) est accouplé ;
et
un partie d'extension (32) déployée depuis la partie de corps (31) étant espacée d'une distance prédéterminée depuis le substrat (20), et étant au contact de l'élément de compression (50, 50a).

4. Ensemble de détection de température (10, 10a) selon la revendication 3, l'orifice (34) étant défini dans la partie d'extension (32).

5. Ensemble de détection de température (10, 10a) selon la revendication 1, le substrat (20) comprenant :
une partie de couplage (21) accouplée au pont (30) ; et
une partie de montage (22) espacée d'une distance prédéterminée du pont (30), et sur laquelle est monté le capteur de température (40).

6. Ensemble de détection de température (10, 10a) selon la revendication 5, une couche adhésive (60) étant agencée entre la partie de couplage (21) et le pont (30).

7. Ensemble de détection de température (10, 10a) selon la revendication 5, le substrat (20) comprenant en outre une partie inclinée (23) raccordant la partie de couplage (21) à la partie de montage (22), et agencée pour être inclinée relativement à la partie de montage (22).

8. Ensemble de détection de température (10, 10a) selon la revendication 1, l'élément de compression (50, 50a) étant fixé sur chacun du substrat (20) et du pont (30).

9. Module de batterie (100) comprenant :
un boîtier (120) ;
un empilement de cellules (110) installé dans le boîtier (120) et comprenant une pluralité de cellules de batterie (111) disposées afin qu'elles soient parallèles l'une à l'autre ; et
un ensemble de détection de température (10, 10a) selon la revendication 1, configuré pour détecter une température de l'empilement de cellules (110).

10. Module de batterie (100) selon la revendication 9, comprenant en outre un cadre de barre omnibus (130) sur lequel est montée une barre omnibus (131) raccordée à la pluralité de cellules de batterie (111),
le pont (30) étant connecté par pivotement au cadre de barre omnibus (130).

11. Module de batterie (100) selon la revendication 9, au moins une partie de l'ensemble de détection de température (10, 10a) étant disposée entre une plaque supérieure (121) du boîtier (120) et l'empilement de cellules (110).
